# EUROPÄISCHE PATENTSCHRIFT

(11) **EP 3 857 088 B1**
(45) Veröffentlichungstag und Bekanntmachung des Hinweises auf die Patenterteilung: **27.11.2024**
(21) Anmeldenummer: 19779412.6
(22) Anmeldetag: 23.09.2019
(51) Int. Cl.: F16D 1/076

(54) **KUPPLUNGSANORDNUNG**
CLUTCH ARRANGEMENT
ENSEMBLE EMBRAYAGE

(30) Priorität: 24.09.2018 DE 102018216204
(43) Veröffentlichungstag der Anmeldung: 04.08.2021
(73) Patentinhaber: ZF Friedrichshafen AG, 88046 Friedrichshafen (DE)
(72) Erfinder: BAUER, Thomas, 97633 Großbardorf (DE)
(86) Internationale Anmeldenummer: PCT/EP2019/075550
(87) Internationale Veröffentlichungsnummer: WO 2020/064644

(56) Entgegenhaltungen:
- WO-A1-2019/076530
- WO-A1-2019/076530
- DE-A1- 10 221 625
- DE-A1- 10 221 625
- DE-A1- 102009 038 198
- DE-A1- 102009 038 198
- US-A1- 2010 105 518
- US-A1- 2010 105 518
- US-B1- 6 478 101
- US-B1- 6 478 101

## Beschreibung

Die Erfindung betrifft eine Kupplungsanordnung mit einem Kupplungsgehäuse, das eine Antriebseinheit, die beispielsweise eine Brennkraftmaschine umfasst, mit einem Abtrieb, wie einem Getriebe, verbindet, das um eine Zentralachse drehbar ist, und dem an seiner der Antriebseinheit zugewandten Seite im radialen Erstreckungsbereich seines Drehzentrums ein axialer Zentralvorsprung zugeordnet ist, der zur Aufnahme eines einen Rotor einer Elektromaschine aufnehmenden Rotorträgers dient.

Eine derartige Kupplungsanordnung ist durch die DE 10 2016 014 725 A1 bekannt. Der Rotorträger und damit der Rotor einer Elektromaschine ist durch Befestigungselemente, die Teil einer lösbaren Verbindungseinheit einer Befestigungseinrichtung sind, an der als hydrodynamischer Drehmomentwandler ausgebildeten Kupplungsanordnung aufgenommen. Insbesondere dann, wenn sich der Rotor, ausgehend von dem Rotorträger, in Richtung zum Kupplungsgehäuse erstreckt und dieses somit zumindest teilweise axial überlappt, kann eine kompakte axiale Bauweise für die Kupplungsanordnung erzielt werden. Nachteilig macht sich allerdings bemerkbar, dass der Rotorträger das Kupplungsgehäuse an dessen dem Antrieb zugewandter Seite nahezu vollständig überdeckt und dadurch dem Kupplungsgehäuse die Möglichkeit entzieht, auf einfache Weise unmittelbar mit dem Antrieb verbunden zu werden.

Weitere Beispiele aus dem Stand der Technik sind aus DE 102 21 625 A1, DE 10 2009 038 198 A1, US 6 478 101 B1 oder US 2010/105518 A1 bekannt.

Der Erfindung liegt die Aufgabe zugrunde, eine Kupplungsanordnung derart auszubilden, dass diese bei kompakter axialer Bauweise auf einfache Weise unmittelbar mit einem Antrieb verbunden werden kann.

Zur Lösung dieser Aufgabe ist vorgesehen, eine Kupplungsanordnung mit einem Kupplungsgehäuse zu versehen, das eine Antriebseinheit, der beispielsweise eine Brennkraftmaschine zugeordnet ist, mit einem Abtrieb, wie einem Getriebe, verbindet, das um eine Zentralachse drehbar ist, und das an seiner dem Antrieb zugewandten Seite im radialen Erstreckungsbereich seines Drehzentrums über einen axialen Zentralvorsprung verfügt, der zur Aufnahme eines einen Rotor einer Elektromaschine aufnehmenden Rotorträgers dient.

Von besonderer Bedeutung ist, dass der Zentralvorsprung über eine erste Verbindungseinrichtung mit einer dem Antrieb zugeordneten Antriebseinheit und über eine zweite Verbindungseinrichtung mit dem Rotorträger zumindest drehfest verbunden ist.

Durch Herstellung jeweils einer zumindest drehfesten Verbindung zwischen dem Zentralvorsprung und der Antriebseinheit zum einen und zwischen dem Zentralvorsprung und dem Rotorträger zum anderen kann in räumlich sehr kompakter Bauweise eine Bewegung der Antriebseinheit, die beispielsweise einen Torsionsschwingungsdämpfer und/oder ein Tilgersystem umfassen kann, mittels der ersten Verbindungseinrichtung auf den Zentralvorsprung übertragen werden, und von diesem mittels der zweiten Verbindungseinrichtung auf den Rotorträger. Erfindungsgemäß ist die Zuordnung des Zentralvorsprunges zu dem Kupplungsgehäuse mittels einer Befestigungseinrichtung drehfest realisiert, dann können auf extrem geringem Bauraum zwei Maschinen drehfest mit dem Kupplungsgehäuse verbunden werden, und zwar zum einen eine Brennkraftmaschine über die Antriebseinheit, und zum anderen eine Elektromaschine über den Rotorträger.

Sofern zumindest eine der Verbindungseinrichtungen ebenso wie die Befestigungseinrichtung über vorzugsweise lösbare Verbindungselemente verfügt, und auch die zwischen der Antriebseinheit und dem Zentralvorsprung vorgesehene Verbindungseinrichtung lösbar ausgebildet ist, kann jede der durch diese Verbindungs- und Befestigungseinrichtungen hergestellte zumindest drehfeste Verbindung bei entsprechendem Bedarf jederzeit wieder gelöst werden, ohne hierdurch eine Schädigung oder gar Zerstörung der Kopplungsanordnung hervorzurufen.

In vorteilhafter Ausgestaltung kann die zwischen der Antriebseinheit und dem Zentralvorsprung vorgesehene Verbindungseinrichtung sowohl an dem Zentralvorsprung als auch an dem Torsionsschwingungsdämpfer mit Verzahnungen, insbesondere mit Radialverzahnungen, versehen sein, die, als Steckverbindung wirksam, durch eine vorbestimmte Relativbewegung von Antriebseinheit und Zentralvorsprung zueinander in Wirkverbindung miteinander gebracht werden. Im Fall der zuvor erwähnten Radialverzahnungen genügt es, Antriebseinheit und Zentralvorsprung in Achsrichtung relativ zueinander zu verlagern, beispielsweise durch Aufstecken eines Bauteils der Antriebseinheit auf den Zentralvorsprung.

Zugunsten einer problemlosen Befestigung des Zentralvorsprunges an dem Kupplungsgehäuse weist der Zentralvorsprung einen nach radial außen greifenden Befestigungsflansch auf, welcher mittels vorzugsweise lösbarer Verbindungselemente der Befestigungseinrichtung an dem Kupplungsgehäuse befestigt wird. An der vom Kupplungsgehäuse abgewandten Seite des Befestigungsflansches ist der Zentralvorsprung mit einer Trägereinrichtung für den Rotorträger versehen, die sowohl wenigstens eine Abstützung für den Rotorträger als auch zumindest eine Aufnahme für wenigstens ein vorzugsweise lösbares Verbindungselement der zweiten Befestigungseinrichtung aufweist.

Was den nach radial außen greifenden Befestigungsflansch des Zentralvorsprunges betrifft, so kann dieser den Rotorträger entweder axial zwischen sich und dem Kupplungsgehäuse aufnehmen, oder aber an seiner von dem Kupplungsgehäuse abgewandten Seite. Im erstgenannten Fall ergibt sich eine axial sehr kompakte Bauweise, im anderen Fall dagegen eine problemlosere Montage. Von besonderem Vorteil ist es hierbei, wenn der nach radial außen greifende Befestigungsflansch des Zentralvorsprunges in denjenigen Umfangsbereichen, in denen er über Verbindungselemente der Befestigungseinrichtung an dem Kupplungsgehäuse angreift, diese Verbindungselemente umgreifend radial weiter nach außen ragt als in Umfangsbereichen zwischen jeweils zwei Verbindungselementen. Idealerweise ergibt sich hierdurch für den nach radial außen greifende Befestigungsflansch des Zentralvorsprunges in seinem radialen Umfangsbereich eine zumindest im Wesentlichen gewellte Außenkontur, welche ein axialelastisches Verhalten des Befestigungsflansches begünstigt, was wiederum eine Entkopplung des Kupplungsgehäuses gegenüber Schwingungen in Achsrichtung erlaubt, die von einem Antrieb erzeugt werden.

Vorteilhafterweise ist der Zentralvorsprung an der vom Kupplungsgehäuse abgewandten Seite des Befestigungsflansches mit einer Trägereinrichtung für den Rotorträger versehen, die sowohl wenigstens eine Abstützung für den Rotorträger als auch zumindest eine Aufnahme für wenigstens ein Verbindungselement der zweiten Befestigungseinrichtung aufweist. Die Trägereinrichtung für den Rotorträger liegt mit besonderem Vorzug in Form von Verstrebungen vor, die an der vom Kupplungsgehäuse abgewandten Seite des nach radial außen greifenden Befestigungsflansches des Zentralvorsprunges vorgesehen sind, und sich, ausgehend von einer Nabe des Zentralvorsprunges, jeweils zumindest im Wesentlichen nach radial außen erstrecken. Die Verstrebungen münden hierbei jeweils mit ihrem radial inneren Ende in der Nabe des Zentralvorsprunges, und umschließen jeweils mit ihrem radial äußeren Ende zumindest eine Aufnahme für wenigstens ein Verbindungselement der zweiten Befestigungseinrichtung.

Zu dem Rotorträger kann ausgeführt werden, dass dieser zumindest an seiner vom Kupplungsgehäuse abgewandten Seite in Umfangsrichtung über eine Mehrzahl von Ausnehmungen verfügt. Hierdurch können unterschiedliche Vorteile erzielt werden, wie Geber für eine Rotationsbewegung, Kühlluftzufuhr und/oder Gewichtsreduktion durch Materialeinsparung.

Mit besonderem Vorzug ist die Kupplungsanordnung in einem Aufnahmeraum eines Getriebegehäuses angeordnet, der über eine Abdeckung von einem weiteren Raum des Getriebes getrennt ist. Der Zentralvorsprung der Kopplungsanordnung kann mittels einer Lagereinrichtung gegenüber dieser Abdeckung zentriert sein, so dass die Kupplungsanordnung Rotationen innerhalb des Getriebes um dessen Längsachse ausführen kann, wobei die Zentralachse der Kupplungsanordnung vorzugsweise mit der Längsachse des Getriebegehäuses zusammenfällt. Zusätzlich kann der Zentralvorsprung mittels einer Dichteinrichtung gegenüber der Abdeckung abgedichtet sein. Aufgrund dieser Dichtung befindet sich die Kupplungsanordnung entsprechend dem jeweiligen Befüllungsgrad des Getriebegehäuses in einem Feuchtraum, in welchem vorzugsweise ein Fluidnebel enthalten ist, oder in einem Nassraum, der mit Fluid vollgefüllt sein kann. Im Gegensatz dazu kann die Antriebseinheit außerhalb des von der Abdeckung begrenzten Aufnahmeraumes und damit innerhalb des zuvor erwähnten weiteren Raumes angeordnet sein. Sofern dieser weitere Raum ohne Benetzung durch Fluidnebel oder ohne Befüllung mit Fluid auskommt, ist er als Trockenraum ausgeführt.

Die Antriebseinheit kann einen Torsionsschwingungsdämpfer und/oder ein Tilgersystem umfassen. Alternativ oder zusätzlich kann auch das Kupplungsgehäuse einen Torsionsschwingungsdämpfer und/oder ein Tilgersystem umfassen. Im erstgenannten Fall wären Torsionsschwingungsdämpfer und/oder Tilgersystem im Trockenraum enthalten, im anderen Fall dagegen im Feucht- oder Nassraum.

In den Figuren sind Ausführungsbeispiele dargestellt. Es zeigt:
Fig. 1 eine Kupplungsanordnung mit einem eine Antriebseinheit mit einem Abtrieb verbindenden Kupplungsgehäuse, dem an seiner der Antriebseinheit zugewandten Seite im radialen Erstreckungsbereich seines Drehzentrums ein axialer Zentralvorsprung zugeordnet ist, der zur Aufnahme eines einen Rotor einer Elektromaschine aufnehmenden Rotorträgers dient;
Fig. 2 das Kupplungsgehäuse und der axiale Zentralvorsprung aus Blickrichtung des Pfeiles P1 in Fig. 1;
Fig. 3 eine Herauszeichnung des axialen Zentralvorsprunges der Fig. 1 mit Anordnung des Rotorträgers für den Rotor einer Elektromaschine an der vom Kupplungsgehäuse abgewandten Seite des Zentralvorsprunges;
Fig. 4 wie Fig. 3, aber mit Anordnung des Rotorträgers für den Rotor einer Elektromaschine axial zwischen dem Zentralvorsprung und dem Kupplungsgehäuse;
Fig. 5 der axiale Zentralvorsprung und der Rotorträger für den Rotor einer Elektromaschine der Fig. 4 aus Blickrichtung des Pfeiles P2 in Fig. 4.

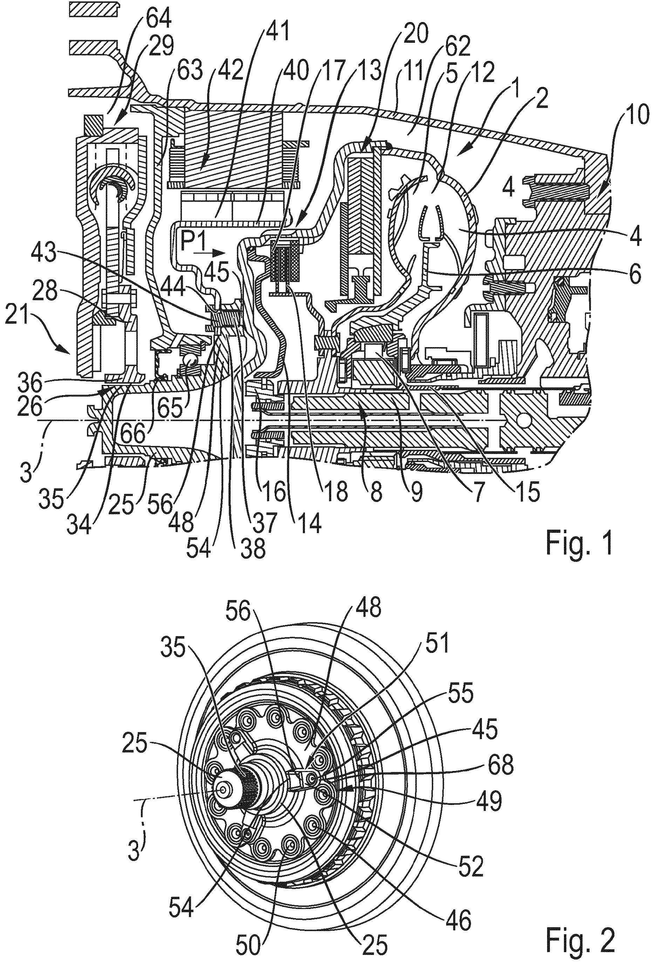

Bei dem in Fig. 1 dargestellten Antriebsstrang ist die Kupplungsanordnung 1 als hydrodynamischer Drehmomentwandler ausgebildet. Die Kupplungsanordnung 1 weist ein Kupplungsgehäuse 2 auf, das Rotationsbewegungen um eine Zentralachse 3 ausführen kann. Das Kupplungsgehäuse 2 ist, durch Aufnahme von Pumpenradschaufeln, als Pumpenrad 4 wirksam, das mit einem Turbinenrad 5 zusammenwirkt, das mit einem Abtrieb 8, gebildet durch eine Getriebeeingangswelle 9 eines Getriebes 10, drehfest verbunden ist. Axial zwischen dem Pumpenrad 4 und dem Turbinenrad 5 ist ein Leitrad 6 auf einem Freilauf 7 positioniert, der zumindest in Rotationsrichtung an einer Stützwelle 15 aufgenommen ist, welche die Getriebeeingangswelle 9 des Getriebes 10 umgreift. Durch das Pumpenrad 4, das Turbinenrad 5 und das Leitrad 6 wird ein hydrodynamischer Kreis 12 gebildet, der durch eine Kupplungsvorrichtung 13 überbrückt werden kann, indem die Bewegung des Kupplungsgehäuses 2 unter Umgehung des hydrodynamischen Kreises 12 auf den Abtrieb 8 geleitet wird. Hierzu muss die Kupplungsvorrichtung 13 eingerückt sein, wofür ein Kolben 14, der auf einer Kupplungsgehäusenabe 16 axial verlagerbar angeordnet ist, in eine Richtung bewegt wird, in welcher er antriebsseitige Kupplungselemente 17, die mit dem Kupplungsgehäuse 2 drehfest sind, mit abtriebsseitigen Kupplungselementen 18, die mit dem Turbinenrad 5 und daher mit dem Abtrieb 8 drehfest sind, in Wirkverbindung miteinander bringt. Zum Ausrücken wird der Kolben 14 in axialer Gegenrichtung verlagert, und löst dadurch die Wirkverbindung zwischen den Kupplungselementen 17 und 18. Schließlich nimmt das Kupplungsgehäuse 2, das in einem Getriebegehäuse 11 des Getriebes 10 aufgenommen ist, ein Tilgersystem 20 auf, durch welches Anregungen einer einen Torsionsschwingungsdämpfer 29 aufweisenden Antriebseinheit 21 getilgt werden können.

An der der Antriebseinheit 21 zugewandten Seite des Kupplungsgehäuses 2 ist ein in Richtung zur Antriebseinheit 21 überstehender axialer Zentralvorsprung 25 vorgesehen, der die Zentralachse 3 symmetrisch umgibt. Der Zentralvorsprung 25 ist über eine erste Verbindungseinrichtung 26 mit einem Abtriebsflansch 28 des Torsionsschwingungsdämpfers 29 der Antriebseinheit 21 verbunden, wobei die erste Verbindungseinrichtung 26 über Radialverzahnungen 34, 35 verfügt, von denen die eine Radialverzahnung 34 an der radialen Innenseite eines Flanschfußes 36 des Abtriebsflansches 28 des Torsionsschwingungsdämpfers 29 vorgesehen ist, und die andere Radialverzahnung 35 an der radialen Außenseite des Zentralvorsprunges 25. Die beiden Radialverzahnungen 34 und 35 sind durch Axialverlagerung von Abtriebsflansch 28 des Torsionsschwingungsdämpfers 29 und Zentralvorsprung 25 miteinander in Wirkverbindung bringbar oder lösbar. Somit bilden die Radialverzahnungen 34 und 35 lösbare Verbindungselemente 31 und 32 der ersten Verbindungseinrichtung 26.

Der Zentralvorsprung 25 ist über eine zweite Verbindungseinrichtung 38 mit einem Rotorträger 40 eines Rotors 41 einer Elektromaschine 42 drehfest verbunden. Zur Bildung der Verbindungseinrichtung 38 sind lösbare Verbindungselemente 43 in Form von Schrauben 37 vorgesehen, die von der Seite der Antriebseinheit 21 aus Ausnehmungen 44 im Rotorträger 40 durchdringen, und in Gewindeausnehmungen 45 eingedreht werden, die, wie Fig. 2 erkennen lässt, in Aufnahmen 55 von Abstützungen 52 einer Trägereinrichtung 51 für den Rotorträger 40 vorgesehen sind. Die Trägereinrichtung 51 für den Rotorträger 40 ist an einem nach radial außen greifenden Befestigungsflansch 48 des Zentralvorsprunges 25 an der vom Kupplungsgehäuse 2 abgewandten Seite vorgesehen, und nimmt die Abstützungen 52 für den Rotorträger 40 in gleichmäßigen Winkelabständen zueinander auf. Die Abstützungen 52 erstrecken sich, ausgehend von einer Nabe 54 des Zentralvorsprunges 25, jeweils zumindest im Wesentlichen nach radial außen, und bilden jeweils mit ihrem radial äu-βeren Ende eine Aufnahme 55 für wenigstens ein vorzugsweise lösbares Verbindungselement 43 der zweiten Verbindungseinrichtung 38 in Form der Schrauben 37. Jede Abstützung 52 weist im Radialbereich zwischen der Nabe 54 des Zentralvorsprunges 25 und der Aufnahme 55 eine Zentrierkante 56 für den Rotorträger 40 auf, an welcher sich der Rotorträger 40 radial abstützen kann.

Der nach radial außen greifende Befestigungsflansch 48 des Zentralvorsprunges 25 ist, wie Fig. 2 zeigt, über eine Befestigungseinrichtung 49 mit Verbindungselementen 46 in Form einer Vernietung 50 mit dem Kupplungsgehäuse 2 fest verbunden. Der Befestigungsflansch 48 des Zentralvorsprunges 25 ragt in denjenigen Umfangsbereichen, in denen er über die Verbindungselemente 46 der Befestigungseinrichtung 49 an dem Kupplungsgehäuse 2 angreift, diese Verbindungselemente 46 umgreifend radial weiter nach außen als in Umfangsbereichen zwischen jeweils zwei Verbindungselementen 46. Dadurch verfügt der Befestigungsflansch 48 des Zentralvorsprunges 25 in seinem radialen Umfangsbereich über eine zumindest im Wesentlichen gewellte Außenkontur 68.

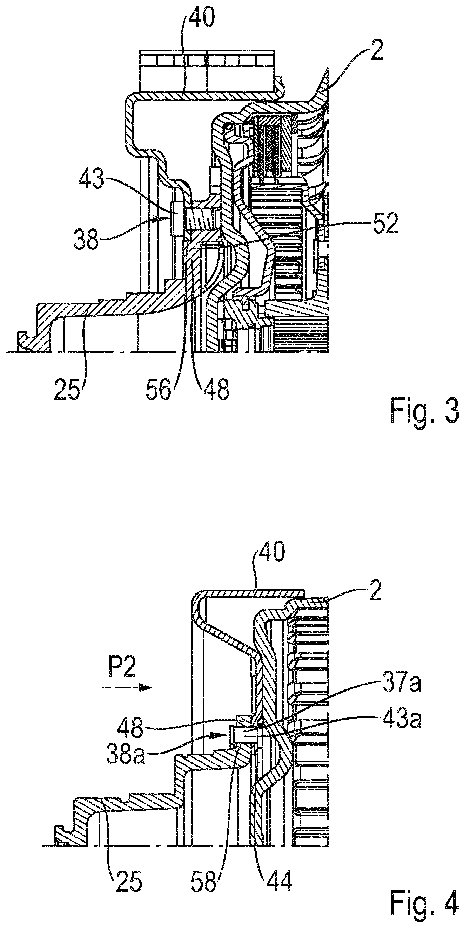

Bei der in Fig. 1 dargestellten Ausführung ist der Rotorträger 40 axial an der vom Kupplungsgehäuse 2 abgewandten Seite des nach radial außen greifenden Befestigungsflansches 48 des Zentralvorsprunges 25 aufgenommen, und wird, nach radialer Abstützung an den Zentrierkanten 56 der Abstützungen 52, durch die Verbindungselemente 43 der zweiten Verbindungseinrichtung 38 an dem Befestigungsflansch 48 des Zentralvorsprunges 25 axial befestigt. Eine derartige Ausführung ist auch in Fig. 3 gezeigt.

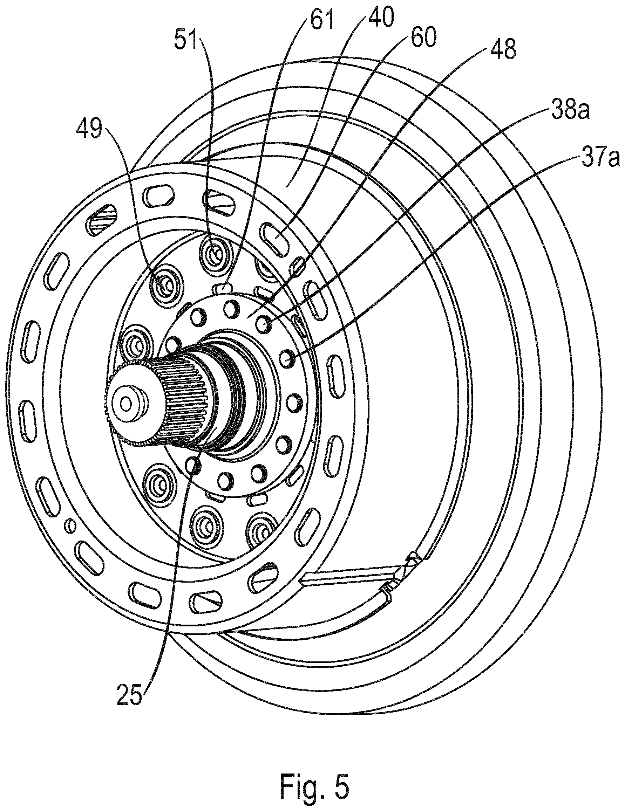

Axial kompakter kann die in Fig. 4 dargestellte Ausführung ausgebildet sein, bei welcher der Rotorträger 40 axial zwischen dem nach radial außen greifenden Befestigungsflansch 48 des Zentralvorsprunges 25 und dem Kupplungsgehäuse 2 aufgenommen ist. Bei dieser Ausführung ist die zweite Verbindungseinrichtung 38a mit Verbindungselementen 43a in Form von Nieten 37a vorgesehen, die sowohl Ausnehmungen 44 im Rotorträger 40 als auch Ausnehmungen 58 im Befestigungsflansch 48 des Zentralvorsprunges 25 durchdringen. Wie Fig. 5 erkennen lässt, ist bei dieser Ausführung der Befestigungsflansch 48 des Zentralvorsprunges 25 ohne Abstützungen einer Trägereinrichtung für den Rotorträger 40 ausgebildet. Somit übernehmen die Nieten 37a der zweiten Verbindungseinrichtung 38a nicht nur die axiale Anbindung des Rotorträgers 40 an den Befestigungsflansch 48 des Zentralvorsprunges 25, sondern auch die Zentrierung.

Wie Fig. 5 weiter erkennen lässt, verfügt der Rotorträger 40 an seiner vom Kupplungsgehäuse 2 abgewandten Seite in Umfangsrichtung über eine Mehrzahl von Ausnehmungen 60, 61. Hierdurch können unterschiedliche Vorteile erzielt werden, wie Geber für eine Rotationsbewegung, Kühlluftzufuhr und/oder Gewichtsreduktion durch Materialeinsparung. Im Fall der Ausnehmungen 60 können diese im Umfangsbereich des jeweiligen Verbindungselementes 51 der Befestigungseinrichtung 49, aber radial außerhalb desselben, ausgebildet sein, im Fall der Ausnehmungen 61 dagegen radial innerhalb desselben.

Wie Fig. 1 zeigt, ist die Kupplungsanordnung 1 in einem Kupplungsraum 62 des Getriebegehäuses 11 des Getriebes 10 angeordnet, der durch eine Abdeckung 63 des Getriebegehäuses 11 von einem den Torsionsschwingungsdämpfer 29 aufnehmenden Dämpferraum 64 getrennt ist. Die Abdeckung 63 nimmt an ihrem radial inneren Ende eine Lagerung 65 sowie eine Dichteinrichtung 66 auf. Die Lagerung 65 dient zur Zentrierung des Zentralvorsprunges 25 der Kupplungsanordnung 1, während die Dichteinrichtung 66 den Kupplungsraum 62 gegenüber dem Dämpferraum 64 abdichtet. Dadurch kann beispielsweise der Kupplungsraum 62 ein Fluid oder lediglich einen Fluidnebel enthalten, während der Dämpferraum 64 trocken ist.

### Bezugszeichen

- 1: Kupplungsanordnung
- 2: Kupplungsgehäuse
- 3: Zentralachse
- 4: Pumpenrad
- 5: Turbinenrad
- 6: Leitrad
- 7: Freilauf
- 8: Abtrieb
- 9: Getriebeeingangswelle
- 10: Getriebe
- 11: Getriebegehäuse
- 12: hydrodynamischer Kreis
- 13: Kupplungsvorrichtung
- 14: Kolben
- 15: Stützwelle
- 16: Kupplungsgehäusenabe
- 17: antriebsseitige Kupplungselemente
- 18: abtriebsseitige Kupplungselemente
- 20: Tilgersystem
- 21: Antriebseinheit
- 25: Zentralvorsprung
- 26: erste Verbindungseinrichtung
- 28: Abtriebsflansch
- 29: Torsionsschwingungsdämpfer
- 31: Verbindungselement
- 32: Verbindungselement
- 34: Radialverzahnung
- 35: Radialverzahnung
- 36: Flanschfuß
- 37: Schrauben
- 37a: Niete
- 38: zweite Verbindungseinrichtung
- 40: Rotorträger
- 41: Rotor
- 42: Elektromaschine
- 43: Verbindungselemente
- 44: Ausnehmungen
- 45: Gewindeausnehmungen
- 46: Verbindungselemente
- 48: Befestigungsflansch
- 49: Befestigungseinrichtung
- 50: Vernietung
- 51: Trägereinrichtung für den Rotorträger
- 52: Abstützungen
- 53: Verstrebungen
- 54: Nabe
- 55: Aufnahme
- 56: Zentrierkante
- 58: Ausnehmungen
- 60: Ausnehmungen
- 61: Ausnehmung
- 62: Kupplungsraum
- 63: Abdeckung
- 64: Dämpferraum
- 65: Lagerung
- 66: Dichteinrichtung
- 68: Außenkontur

## Patentansprüche

1. Kupplungsanordnung (1), angeordnet in einem über eine Abdeckung (63) verfügenden Getriebegehäuse (11), mit einem Kupplungsgehäuse (2), das eine Antriebseinheit (21), die beispielsweise eine Brennkraftmaschine umfasst, mit einem Abtrieb (8), wie einem Getriebe (10), verbindet, das um eine Zentralachse (3) drehbar ist, und dem an seiner der Antriebseinheit (21) zugewandten Seite im radialen Erstreckungsbereich seines Drehzentrums ein axialer Zentralvorsprung (25) zugeordnet ist, der zur Aufnahme eines einen Rotor (41) einer Elektromaschine (42) aufnehmenden Rotorträgers (40) dient, wobei der Zentralvorsprung (25) über eine erste Verbindungseinrichtung (26) mit der Antriebseinheit (21) und über eine zweite Verbindungseinrichtung (38; 38a) mit dem Rotorträger (40) zumindest drehfest verbunden ist, **dadurch gekennzeichnet, dass** der Zentralvorsprung (25) in Richtung der Antriebseinheit (21) übersteht, wobei der Zentralvorsprung (25) über eine Befestigungseinrichtung (49) mit dem Kupplungsgehäuse (2) fest verbunden ist und mittels einer Lagereinrichtung (65) gegenüber der Abdeckung (63) zentriert ist und/oder der Rotorträger (40) zumindest an seiner vom Kupplungsgehäuse (2) abgewandten Seite in Umfangsrichtung über eine Mehrzahl von Ausnehmungen (60, 61) verfügt und dass der der Rotorträger (40) jeweils im Umfangsbereich des jeweiligen Verbindungselementes (51) der Befestigungseinrichtung (49), aber radial außerhalb desselben, mit je einer Ausnehmung (60) ausgebildet ist oder dass der Rotorträger (40) jeweils im Umfangsbereich des jeweiligen Verbindungselementes (51) der Befestigungseinrichtung (49), aber radial innerhalb desselben, mit je einer Ausnehmung (61) ausgebildet ist.

2. Kupplungsanordnung (1) nach Anspruch 1, **dadurch gekennzeichnet, dass** der Zentralvorsprung (25) mittels einer Dichteinrichtung (66) gegenüber der Abdeckung (63) abgedichtet ist.

3. Kupplungsanordnung (1) nach Anspruch 1 oder 2, **dadurch gekennzeichnet, dass** zumindest eine Verbindungseinrichtung (26; 38; 38a) und/oder die Befestigungseinrichtung (49) über vorzugsweise lösbare Verbindungselemente (31, 32; 43; 43a; 46) verfügt.

4. Kupplungsanordnung (1) nach einem der vorangegangenen Ansprüche, **dadurch gekennzeichnet, dass** die zwischen der Antriebseinheit (21) und dem Zentralvorsprung (25) vorgesehene erste Verbindungseinrichtung (26) lösbar ausgebildet ist.

5. Kupplungsanordnung (1) nach Anspruch 4, **dadurch gekennzeichnet, dass** die zwischen der Antriebseinheit (21) und dem Zentralvorsprung (25) vorgesehene erste Verbindungseinrichtung (26) sowohl an dem Zentralvorsprung (25) als auch an dem Torsionsschwingungsdämpfer (29) mit Radialverzahnungen (34, 35) versehen ist.

6. Kupplungsanordnung (1) nach einem der vorangegangenen Ansprüche, **dadurch gekennzeichnet, dass** der Zentralvorsprung (25) einen nach radial au-ßen greifenden Befestigungsflansch (48) aufweist, welcher mittels Verbindungselementen (51) der Befestigungseinrichtung (49) zur Anbindung des Zentralvorsprunges (25) an das Kupplungsgehäuse (2) dient.

7. Kupplungsanordnung (1) nach Anspruch 6, **dadurch gekennzeichnet, dass** der Zentralvorsprung (25) an der vom Kupplungsgehäuse (2) abgewandten Seite des Befestigungsflansches (48) mit einer Trägereinrichtung (51) für den Rotorträger (40) versehen ist, die sowohl wenigstens eine Abstützung (52) für den Rotorträger (40) als auch zumindest eine Aufnahme (55) für wenigstens ein vorzugsweise lösbares Verbindungselement (46) der Befestigungseinrichtung (49) aufweist.

8. Kupplungsanordnung (1) nach einem der vorangegangenen Ansprüche, **dadurch gekennzeichnet, dass** das Kupplungsgehäuse (2) und/oder die Antriebseinheit (21) ein Tilgersystem (20) umfasst.

9. Kupplungsanordnung (1) nach einem der vorangegangenen Ansprüche, **dadurch gekennzeichnet, dass** die Antriebseinheit (21) einen Torsionsschwingungsdämpfer (29) umfasst.

10. Kupplungsanordnung (1) nach Anspruch 6, **dadurch gekennzeichnet, dass** der nach radial außen greifende Befestigungsflansch (48) des Zentralvorsprunges (25) den Rotorträger (40) axial zwischen sich und dem Kupplungsgehäuse (2) aufnimmt.

11. Kupplungsanordnung (1) nach Anspruch 6, **dadurch gekennzeichnet, dass** der nach radial außen greifende Befestigungsflansch (48) des Zentralvorsprunges (25) den Rotorträger (40) an seiner von dem Kupplungsgehäuse (2) abgewandten Seite aufnimmt.

12. Kupplungsanordnung (1) nach Anspruch 6, **dadurch gekennzeichnet, dass** der nach radial außen greifende Befestigungsflansch (48) des Zentralvorsprunges (25) in denjenigen Umfangsbereichen, in denen er über Verbindungselemente (46) der Befestigungseinrichtung (49) an dem Kupplungsgehäuse (2) angreift, diese Verbindungselemente (46) umgreifend radial weiter nach außen ragt als in Umfangsbereichen zwischen jeweils zwei Verbindungselementen (46).

13. Kupplungsanordnung (1) nach Anspruch 12, **dadurch gekennzeichnet, dass** der nach radial außen greifende Befestigungsflansch (48) des Zentralvorsprunges (25) in seinem radialen Umfangsbereich über eine zumindest im Wesentlichen gewellte Außenkontur (68) verfügt.

14. Kupplungsanordnung (1) nach Anspruch 7, **dadurch gekennzeichnet, dass** die Trägereinrichtung (51) für den Rotorträger (40) in Form von Verstrebungen (53) vorliegt, die an der vom Kupplungsgehäuse (2) abgewandten Seite des nach radial außen greifenden Befestigungsflansches (48) des Zentralvorsprunges (25) vorgesehen sind, und sich, ausgehend von einer Nabe (54) des Zentralvorsprunges (25), jeweils zumindest im Wesentlichen nach radial au-ßen erstrecken.

15. Kupplungsanordnung (1) nach Anspruch 14, **dadurch gekennzeichnet, dass** die Verstrebungen (53) jeweils mit ihrem radial inneren Ende in der Nabe (54) des Zentralvorsprunges (25) münden, und jeweils mit ihrem radial äußeren Ende zumindest eine Aufnahme (55) für wenigstens ein vorzugsweise lösbares Verbindungselement (43; 43a) der zweiten Verbindungseinrichtung (38, 38a) umschließen.

## Claims

1. Clutch arrangement (1) disposed in a transmission housing (11) which has a cover (63), having a clutch housing (2) which connects a drive unit (21) that comprises an internal combustion engine, for example, to a drive output (8) such as a transmission (10), and which clutch housing (2) is rotatable about a central axis (3) and on its side facing the drive unit (21), in the region of radial extent of its centre of rotation, is assigned an axial central protrusion (25) that serves to receive a rotor carrier (40) which receives a rotor (41) of an electric machine (42), wherein the central protrusion (25) by way of a first connecting device (26) is at least co-rotationally connected to the drive unit (21), and by way of a second connecting device (38; 38a) is at least co-rotationally connected to the rotor carrier (40), **characterized in that** the central protrusion (25) projects in the direction of the drive unit (21), wherein the central protrusion (25) by way of a fastening device (49) is fixedly connected to the clutch housing (2) an by means of a bearing device (65) is centred in relation to the cover (63), and/or the rotor carrier (40), at least on its side facing away from the clutch housing (2), has a plurality of clearances (60, 61) in the circumferential direction, and **in that** the rotor carrier (40), in each case in the circumferential region of the respective connecting element (51) of the fastening device (49), but radially outside said connecting element (51), is in each case formed having one clearance (60), or **in that** the rotor carrier (40), in each case in the circumferential region of the respective connecting element (51) of the fastening device (49), but radially within said connecting element (51), is in each case formed having one clearance (61).

2. Clutch arrangement (1) according to Claim 1, **characterized in that** the central protrusion (25) is sealed in relation to the cover (63) by means of a sealing device (66).

3. Clutch arrangement (1) according to Claim 1 or 2, **characterized in that** at least one connecting device (26; 38; 38a) and/or the fastening device (49) has preferably releasable connecting elements (31, 32; 43; 43a; 46).

4. Clutch arrangement (1) according to one of the preceding claims, **characterized in that** the first connecting device (26), which is provided between the drive unit (21) and the central protrusion (25) is designed to be releasable.

5. Clutch arrangement (1) according to Claim 4, **characterized in that** the first connecting device (26), which is provided between the drive unit (21) and the central protrusion (25), is provided with radial toothings (34, 35) on the central protrusion (25) as well as on the torsional vibration damper (29) .

6. Clutch arrangement (1) according to one of the preceding claims, **characterized in that** the central protrusion (25) has a radially outwardly engaging fastening flange (48) which by means of connecting elements (51) of the fastening device (49) serves to link the central protrusion (25) to the clutch housing (2).

7. Clutch arrangement (1) according to Claim 6, **characterized in that** the central protrusion (25), on the side of the fastening flange (48) that faces away from the clutch housing (2), is provided with a support device (51) for the rotor carrier (40), which support device (51) has at least one support (52) for the rotor carrier (40) as well as at least one receptacle (55) for at least one, preferably releasable, connecting element (46) of the fastening device (49).

8. Clutch arrangement (1) according to one of the preceding claims, **characterized in that** the clutch housing (2) and/or the drive unit (21) comprise/comprises an absorber system (20).

9. Clutch arrangement (1) according to one of the preceding claims, **characterized in that** the drive unit (21) comprises a torsional vibration damper (29) .

10. Clutch arrangement (1) according to Claim 6, **characterized in that** the radially outwardly engaging fastening flange (48) of the central protrusion (25) receives the rotor carrier (40) so as to be axially between said fastening flange (48) and the clutch housing (2).

11. Clutch arrangement (1) according to Claim 6, **characterized in that** the radially outwardly engaging fastening flange (48) of the central protrusion (25) receives the rotor carrier (40) on that side of said fastening flange (48) that faces away from the clutch housing (2).

12. Clutch arrangement (1) according to Claim 6, **characterized in that** the radially outwardly engaging fastening flange (48) of the central protrusion (25), in those circumferential regions in which said fastening flange (48) by way of connecting elements (46) of the fastening device (49) engages on the clutch housing (2), protrudes radially further outward, while encompassing these connecting elements (46), than in circumferential regions between two respective connecting elements (46) .

13. Clutch arrangement (1) according to Claim 12, **characterized in that** the radially outwardly engaging fastening flange (48) of the central protrusion (25), in the radial circumferential region of said fastening flange (48), has an at least substantially undulating external contour (68) .

14. Clutch arrangement (1) according to Claim 7, **characterized in that** the support device (51) for the rotor carrier (40) is present in the form of struts (53) which are provided on that side of the radially outwardly engaging fastening flange (48) of the central protrusion (25) that faces away from the clutch housing (2) and, proceeding from a hub (54) of the central protrusion (25), extend in each case substantially radially outwards.

15. Clutch arrangement (1) according to Claim 14, **characterized in that** the struts (53), in each case by way of their radially inner end, open into the hub (54) of the central protrusion (25) and, in each case by way of their radially outer end, enclose at least one receptacle (55) for at least one, preferably releasable, connecting element (43; 43a) of the second connecting device (38, 38a).

## Revendications

1. Ensemble embrayage (1), agencé dans un boîtier de transmission (11) comportant un couvercle (63), comprenant un boîtier d'embrayage (2) qui relie une unité d'entraînement (21), qui comprend par exemple un moteur à combustion interne, à une sortie de mouvement (8), telle qu'une transmission (10), qui est apte à tourner autour d'un axe central (3), et auquel est associée, sur son côté tourné vers l'unité d'entraînement (21), dans la zone d'extension radiale de son centre de rotation, une saillie centrale (25) axiale qui sert à recevoir un support de rotor (40) recevant un rotor (41) d'un moteur électrique (42), la saillie centrale (25) étant reliée, au moins solidairement en rotation, à l'unité d'entraînement (21) par l'intermédiaire d'un premier dispositif de liaison (26) et au support de rotor (40) par l'intermédiaire d'un deuxième dispositif de liaison (38 ; 38a), **caractérisé en ce que** la saillie centrale (25) fait saillie en direction de l'unité d'entraînement (21), la saillie centrale (25) étant reliée fixement au boîtier d'embrayage (2) par un dispositif de fixation (49) et étant centrée par rapport au couvercle (63) au moyen d'un dispositif (65) formant palier et/ou le support de rotor (40) comprenant au moins sur son côté opposé au boîtier d'embrayage (2), dans la direction périphérique, une pluralité d'évidements (60, 61), et **en ce que** le support de rotor (40) est réalisé dans la zone périphérique respective de l'élément de liaison respectif (51) du dispositif de fixation (49), mais radialement à l'extérieur de celui-ci, avec un évidement (60) respectif, ou **en ce que** le support de rotor (40) est réalisé dans la zone périphérique respective de l'élément de liaison (51) respectif du dispositif de fixation (49), mais radialement à l'intérieur de celui-ci, avec un évidement (61) respectif.

2. Ensemble embrayage (1) selon la revendication 1, **caractérisé en ce que** la saillie centrale (25) est rendue étanche par rapport au couvercle (63) au moyen d'un dispositif d'étanchéité (66).

3. Ensemble embrayage (1) selon la revendication 1 ou la revendication 2, **caractérisé en ce qu'**au moins un dispositif de liaison (26 ; 38 ; 38a) et/ou le dispositif de fixation (49) comprend des éléments de liaison (31, 32 ; 43 ; 43a ; 46) de préférence amovibles.

4. Ensemble embrayage (1) selon l'une des revendications précédentes, **caractérisé en ce que** le premier dispositif de liaison (26) prévu entre l'unité d'entraînement (21) et la saillie centrale (25) est conçu de façon à être amovible.

5. Ensemble embrayage (1) selon la revendication 4, **caractérisé en ce que** le premier dispositif de liaison (26) prévu entre l'unité d'entraînement (21) et la saillie centrale (25) est pourvu de dentures radiales (34, 35) à la fois sur la saillie centrale (25) et sur l'amortisseur (29) de vibrations de torsion.

6. Ensemble embrayage (1) selon l'une des revendications précédentes, **caractérisé en ce que** la saillie centrale (25) présente une bride de fixation (48) s'étendant radialement vers l'extérieur, qui sert à relier la saillie centrale (25) au boîtier d'embrayage (2) au moyen d'éléments de liaison (51) du dispositif de fixation (49) .

7. Ensemble embrayage (1) selon la revendication 6, **caractérisé en ce que** la saillie centrale (25) est pourvue, sur le côté de la bride de fixation (48) opposé au boîtier d'embrayage (2), d'un dispositif de support (51) pour le support de rotor (40), qui présente aussi bien au moins un appui (52) pour le support de rotor (40) qu'au moins un logement (55) pour au moins un élément de liaison (46), de préférence amovible, du dispositif de fixation (49) .

8. Ensemble embrayage (1) selon l'une des revendications précédentes, **caractérisé en ce que** le boîtier d'embrayage (2) et/ou l'unité d'entraînement (21) comprend un système (20) d'amortissement de masse.

9. Ensemble embrayage (1) selon l'une des revendications précédentes, **caractérisé en ce que** l'unité d'entraînement (21) comprend un amortisseur (29) de vibrations de torsion.

10. Ensemble embrayage (1) selon la revendication 6, **caractérisé en ce que** la bride de fixation (48) de la saillie centrale (25), qui s'engage radialement vers l'extérieur, reçoit le support de rotor (40) axialement entre elle et le boîtier d'embrayage (2).

11. Ensemble embrayage (1) selon la revendication 6, **caractérisé en ce que** la bride de fixation (48) de la saillie centrale (25), qui s'engage radialement vers l'extérieur, reçoit le support de rotor (40) sur son côté opposé au boîtier d'embrayage (2).

12. Ensemble embrayage (1) selon la revendication 6, **caractérisé en ce que** la bride de fixation (48) de la saillie centrale (25), qui s'engage radialement vers l'extérieur, fait saillie radialement plus vers l'extérieur, dans les zones périphériques dans lesquelles elle s'engage sur le boîtier d'embrayage (2) par l'intermédiaire d'éléments de liaison (46) du dispositif de fixation (49), en entourant ces éléments de liaison (46), que dans les zones périphériques entre deux éléments de liaison (46) respectifs.

13. Ensemble embrayage (1) selon la revendication 12, **caractérisé en ce que** la bride de fixation (48) de la saillie centrale (25), qui s'engage radialement vers l'extérieur, présente dans sa zone périphérique radiale un contour extérieur (68) au moins sensiblement ondulé.

14. Ensemble embrayage (1) selon la revendication 7, **caractérisé en ce que** le dispositif de support (51) pour le support de rotor (40) se présente sous la forme d'entretoises (53) qui sont prévues sur le côté, opposé au boîtier d'embrayage (2), de la bride de fixation (48), s'étendant radialement vers l'extérieur, de la saillie centrale (25), et qui s'étendent chacune, à partir d'un moyeu (54) de la saillie centrale (25), au moins essentiellement radialement vers l'extérieur.

15. Ensemble embrayage (1) selon la revendication 14, **caractérisé en ce que** les entretoises (53) débouchent chacune par leur extrémité radialement intérieure dans le moyeu (54) de la saillie centrale (25), et entourent chacune par leur extrémité radialement extérieure au moins un logement (55) pour au moins un élément de liaison (43 ; 43a), de préférence amovible, du deuxième dispositif de liaison (38, 38a).
